# EUROPÄISCHE PATENTSCHRIFT

(11) **EP 2 121 230 B1**
(45) Veröffentlichungstag und Bekanntmachung des Hinweises auf die Patenterteilung: **28.09.2011**
(21) Anmeldenummer: 08706740.1
(22) Anmeldetag: 15.01.2008
(51) Int. Cl.: B23D 63/04

(54) **VORRICHTUNG ZUM SCHRÄNKEN VON ZÄHNEN EINES SÄGEBANDES, VERFAHREN ZUM TRANSPORT EINES SÄGEBANDES UND VERFAHREN ZUM SCHRÄNKEN VON ZÄHNEN EINES SÄGEBANDES**
DEVICE FOR SETTING THE TEETH OF A SAW BAND, METHOD FOR TRANSPORTING A SAW BAND AND METHOD FOR SETTING THE TEETH OF A SAW BAND
DISPOSITIF ET PROCÉDÉ DESTINÉS À AVOYER LES DENTS D'UN RUBAN DE SCIE ET PROCÉDÉ D'ACHEMINEMENT D'UN RUBAN DE SCIE

(30) Priorität: 16.01.2007 DE 102007003101
(43) Veröffentlichungstag der Anmeldung: 25.11.2009
(73) Patentinhaber: Hagel, Martin, 88250 Weingarten (DE); Kasper, Roland, 87541 Hindelang (DE)
(72) Erfinder: Hagel, Martin, 88250 Weingarten (DE); Kasper, Roland, 87541 Hindelang (DE)
(74) Vertreter: Otten, Roth, Dobler & Partner
(86) Internationale Anmeldenummer: PCT/DE2008/000037
(87) Internationale Veröffentlichungsnummer: WO 2008/086775

(56) Entgegenhaltungen:
- EP-A- 0 742 067
- WO-A-02/066192
- DE-A1- 2 508 616

## Beschreibung

Die Erfindung betrifft eine Vorrichtung zum Schränken von Zähnen eines Sägebandes nach Patentanspruch 1, ein Verfahren zum Transport eines Sägebandes nach Patentanspruch 8 und ein Verfahren zum Schränken von Zähnen eines Sägebandes nach Patenanspruch 10.

Eine ähnliche Vorrichtung ist aus der DE 195 17 482 A1 bekannt. Diese Vorrichtung zum Schränken von Zähnen eines Sägebandes weist zwei um Biegeachsen von Zähnen des Sägebandes verschwenkbare Biegeeinheiten auf, mit einer derartigen Vorrichtung ist es schwierig auf Abweichungen oder Veränderungen der Zahnteilung des Sägebandes rasch und flexibel zu reagieren.

Die Druckschrift EP 0 742 067 A zeigt eine Vorrichtung zum Schränken von Sägeblättern, wobei das Sägeblatt zwischen zwei Spannköpfen gehalten ist, wobei zwei gegen die Zähne bewegliche Schränkeisen auf einer kreisförmigen Führungsbahn bewegt werden und die Zähne des Sägeblattes im Wechsel schränken. Das Sägeblatt wird beispielsweise motorisch angetrieben an den Schränkeisen nach dem Schränken vorbeigeführt. Der Oberbegriff von Anspruch 1 basiert auf diesem Dokument.

Die Druckschrift DE 25 08 616 A zeigt eine Vorrichtung und eine Verfahren zum Schränken von Zähnen eines Sägeblattes, wobei die Vorrichtung eine auf einem Bett elastisch angeordnete Einspannvorrichtung zum Halten des Sägeblattes in schwimmender Lage umfasst und ein Paar hin- und her verschiebbare Schlagelemente, wobei jedes Schlagelement auf die Flanke eines Zahns einwirkt und dieses schränkt. Der Vorschub des Sägeblattes erfolgt mittels eines Mechanismus.

Die Druckschrift WO 02/066192 A zeigt eine Schrankvorrichtung für Sägeblätter, welche jeden Zahn eines Sägeblattes mittels auf zwei Schränkwalzen angeordneten Rippen mit identischen Drehzahlen biegt, wobei die Schränkwalzen konisch sind und das Sägeblatt unterhalb der Zähne von zwei zylindrischen Druckrollen gequetscht wird. Der Vorschub des Sägeblattes erfolgt durch separate Fördermechanismen.

Der Erfindung liegt die Aufgabe zugrunde, eine Vorrichtung zu entwickeln, die es ermöglicht auf Abweichungen oder Veränderungen der Zahnteilung des Sägebandes rasch und flexibel zu reagieren und ein entsprechendes Verfahren anzugeben sowie ein Verfahren zum Transport eines Sägebandes anzugeben, welches eine rasche und flexible Reaktion auf Abweichungen oder Veränderungen der Zahnteilung des Sägebandes erlaubt.

Diese Aufgabe wird bei einer Vorrichtung zum Schränken von Zähnen eines Sägebandes durch die Merkmale des Anspruchs 1, bei einem Verfahren zum Transport eines Sägebandes durch die Merkmale des Anspruchs 8 und bei einem Verfahren zum Schränken von Zähnen eines Sägebandes durch die Merkmale des Anspruchs 10 gelöst,

Die erfindungsgemäße Vorrichtung zum Schränken von Zähnen eines Sägebandes umfasst eine Biegeeinheit, welche auf einer parallel zu der Vorlaufrichtung des Sägebandes liegenden Fahrstrecke unabhängig von dem Sägeband verfahrbar ist. Hierdurch ist es möglich die Biegeeinheit in Vorlaufrichtung oder entgegen der Vorlaufrichtung auf das Sägeband auszurichten und so durch eine flexible Positionierung der Biegeeinheit Abweichungen oder Veränderungen der Zahnteilung auszugleichen, ohne das Sägeband neu positionieren zu müssen. Kern der Erfindung ist die Vermeidung einer nachträglichen Bewegung des Sägebandes zur Korrektur einer Fehlpositionierung oder einer geänderten Zahnteilung durch die Verwendung einer verfahrbaren Biegeeinheit. Hierdurch kann rasch und flexibel reagiert werden, da sich die Vorrichtung eigenständig auf das zwischen einer Abwickelvorrichtung und einer Aufwickelvorrichtung eingespannte Sägeband ausrichten kann.

Weiterhin sieht die Erfindung vor, die Vorrichtung mit wenigstens einer zweiten um Biegeachsen der Zähne des Sägebandes verschwenkbaren Biegeeinheit auszustatten, wobei diese zweite Biegeeinheit ebenfalls auf einer parallel zu der Laufrichtung des Sägebandes liegenden Fahrstrecke unabhängig von dem Sägeband und unabhängig von der ersten Biegeeinheit verfahrbar ist. Hierdurch kann die Arbeitsleistung der Vorrichtung bei gleich bleibender Flexibilität der Vorrichtung erhöht werden.

Erfindungsgemäß ist eine gleichzeitige Verfahrbarkeit der Biegeeinheit und des Sägebandes vorgesehen. Hierdurch kann eine Transportzeit des Sägebandes auch von der Biegeeinheit beispielsweise zur Positionierung genutzt werden.

Insbesondere ist es vorgesehen, während einer Mitfahrbewegung der ersten und/oder der zweiten Biegeeinheit mit dem Sägeband wenigstens einen der Zähne des Sägebands durch die jeweils mitfahrende Biegeeinheit zu biegen. Hierdurch ist eine besonders effektive Ausnutzung der Transportzeit bzw. Vorschubzeit für das Sägeband möglich, da der oder die entsprechenden Zähne nicht wie bislang bei still stehendem Sägeband, sondern während der Fahrbewegung des Sägebandes geschränkt werden.

Erfindungsgemäß ist es weiterhin vorgesehen, das Sägeband durch die erste Biegeeinheit und/oder die zweite Biegeeinheit zu transportieren. Durch eine Übernahme des Transports bzw. der Bewegung des Sägebandes durch die erste Biegeeinheit und/oder die zweite Biegeeinheit ist es möglich auf eine zusätzliche Transporteinheit zu verzichten und hierdurch die Investitionskosten für die Gesamtanlage zu reduzieren.

Insbesondere sieht die Erfindung vor, das Sägeband abwechselnd durch die erste bzw. zweite Biegeeinheit zu transportieren. Hierdurch ist es möglich, dass die nicht transportierende Biegeeinheit während das Sägebandes durch die transportierende Einheit transportiert wird eine Rückfahrbewegung macht und so ohne Zeitverlust für den Biegevorgang und den Transportvorgang wieder in Ihre Startposition gelangt.

Alternativ sieht die Erfindung vor, das Sägeband durch eine zusätzliche Transporteinheit zu transportieren. Hierdurch können für die Biegeeinheiten Antriebe mit geringem Platzbedarf verwendet werden.

Das erfindungsgemäße Verfahren zum Transport eines Sägebandes durch eine erste Biegeeinheit und eine zweite Biegeeinheit wird durch Anspruch 1 beschrieben. Hierdurch ist es möglich, dass die nicht transportierende Biegeeinheit während des Transports durch die transportierende Einheit eine Rückfahrbewegung macht und so ohne Zeitverlust für den Biegevorgang und den Transportvorgang wieder in Ihre Startposition gelangt.

Weiterhin sieht das Verfahren zum Transport eines Sägebandes vor, während des Transports des Sägebandes durch eine der Biegeeinheiten wenigstens einen Zahn des Sägebandes zu biegen. Hierdurch ist es möglich, die für den Transport des Sägebandes erforderliche Zeit optimal zu nutzen und die Stillstandszeit des Sägebandes zwischen den einzelnen Transportvorgängen auf ein Minimum zu reduzieren.

Das erfindungsgemäße Verfahren zum Schränken von Zähnen eines Sägebandes sieht ausgehend von einer ersten Biegeeinheit, die in einer hinteren Position auf einen ersten Zahn oder eine erste Zahngruppe ausgerichtet ist, und ausgehend von einer zweiten Biegeeinheit, die in einer vorderen Position auf einen zweiten Zahn oder eine zweite Zahngruppe ausgerichtet ist, die folgenden Schritte vor:
- Transport des Sägebandes in eine Vorlaufrichtung und gleichzeitiges Biegen des ersten Zahns oder der ersten Zahngruppe durch die erste Biegeeinheit und gleichzeitigen Rücklauf der zweiten Biegeeinheit in eine Rücklaufrichtung auf eine hintere Position der zweiten Biegeeinheit;
- Transport des Sägebandes in die Vorlaufrichtung und gleichzeitiges Biegen des vierten Zahns oder der vierten Zahngruppe durch die zweite Biegeeinheit und Rücklauf der ersten Biegeeinheit in die Rücklaufrichtung auf die hintere Position.

Dieser Ablauf wird analog fortgesetzt, wobei von der ersten Biegeeinheit ein dritter Zahn oder eine dritte Zahngruppe und anschließend von der zweiten Biegeeinheit ein sechster Zahn oder eine sechste Zahngruppe gebogen wird. Hierdurch ist eine besonders effektive Ausnutzung der Transportzeit bzw. Vorschubzeit für das Sägeband möglich, da der oder die entsprechenden Zähne bzw. Zahngruppen während der Fahrbewegung geschränkt werden.

Weiterhin sieht die Erfindung vor, bei dem Verfahren zum Schränken von Zähnen eines Sägebandes vor dem ersten Transport folgende Schritte durchzuführen,
- Klemmen des ersten Zahns oder der ersten Zahngruppe durch die erste Biegeeinheit in der hinteren Position der ersten Biegeeinheit und gleichzeitiges oder späteres Freigeben des zweiten Zahns oder der zweiten Zahngruppe durch die zweite Biegeeinheit in der vorderen Position der zweiten Biegeeinheit,
   und das vor dem zweiten Transport folgende Schritte durchzuführen,
- Freigeben des ersten Zahns oder der ersten Zahngruppe durch die erste Biegeeinheit in einer vorderen Position der ersten Biegeeinheit und vorhergehendes oder gleichzeitiges Klemmen eines vierten Zahns oder einer vierten Zahngruppe durch die zweite Biegeeinheit in der hinteren Position der zweiten Biegeeinheit.
Durch das Festklemmen der Biegeeinheiten an dem Sägeband kann zum einen eine Positionierung zwischen der jeweiligen Biegeeinheit und dem Sägeband für eine Vorschubbewegung beibehalten werden, zum anderen ist durch das Festklemmen der jeweiligen Biegeeinheit an dem Sägeband ein präzisier Schränkvorgang möglich, da ein Spiel zwischen dem Sägeband und der Biegeeinheit vermieden wird.

Erfindungsgemäß ist es bei dem Verfahren zum Schränken von Zähnen eines Sägebandes vorgesehen, den ersten Transport des Sägebandes mit der ersten Biegeeinheit und den zweiten Transport des Sägebandes mit der zweiten Biegeeinheit durchzuführen. Durch eine Übernahme des Transports bzw. der Bewegung des Sägebandes durch die erste Biegeeinheit bzw. die zweite Biegeeinheit ist es möglich auf eine zusätzliche Transporteinheit zu verzichten und hierdurch die Investitionskosten für die Gesamtanlage zu reduzieren.

Alternativ sieht das Verfahren zum Schränken von Zähnen eines Sägebandes vor, den ersten und den zweiten Transport des Sägebandes mit einer Transporteinheit durchzuführen. Hierdurch können für die Biegeeinheiten Antriebe mit geringem Platzbedarf verwendet werden.

Schließlich sieht das erfindungsgemäße Verfahren vor, das Sägeband mit der Biegeeinheit zu klemmen während es noch von der jeweils anderen Biegeeinheit transportiert wird oder während die jeweils andere Biegeeinheit noch mit dem Sägeband mitfährt. Ein derartiges Vorgehen führt zu einer Art fliegendem Wechsel bzw. fliegender Übergabe. Hierdurch ist es möglich das Sägeband ohne Stillstand in die Vorlaufrichtung zu bewegen.

Im Sinne der Erfindung ist unter einem Sägeband sowohl ein Sägeband zu verstehen, aus welchem mehrere Sägeblätter herstellbar sind als auch ein Sägeband zu verstehen, welches ein einzelnes Sägeblatt bildet.

Weitere Einzelheiten der Erfindung werden in der Zeichnung anhand von schematisch dargestellten Ausführungsbeispielen beschrieben.

Hierbei zeigt:
- Figur 1a, 1b:: Darstellungen einer ersten Ausführungsvariante einer erfindungsgemäßen Vorrichtung;
- Figur 2:: Darstellung einer zweiten Ausführungsvariante einer erfindungsgemäßen Vorrichtung;
- Figur 3:: Darstellung einer dritten Ausführungsvariante einer erfindungsgemäßen Vorrichtung;
- Figur 4:: Bewegungsablauf einer erfindungsgemäßen Vorrichtung in acht schematischen Ansichten;
- Figur 5a - 5c:: Bewegungsablauf einer erfindungsgemäßen Vorrichtung in drei perspektivischen Ansichten und
- Figur 6:: Flussdiagramm zum Bewegungsablauf.

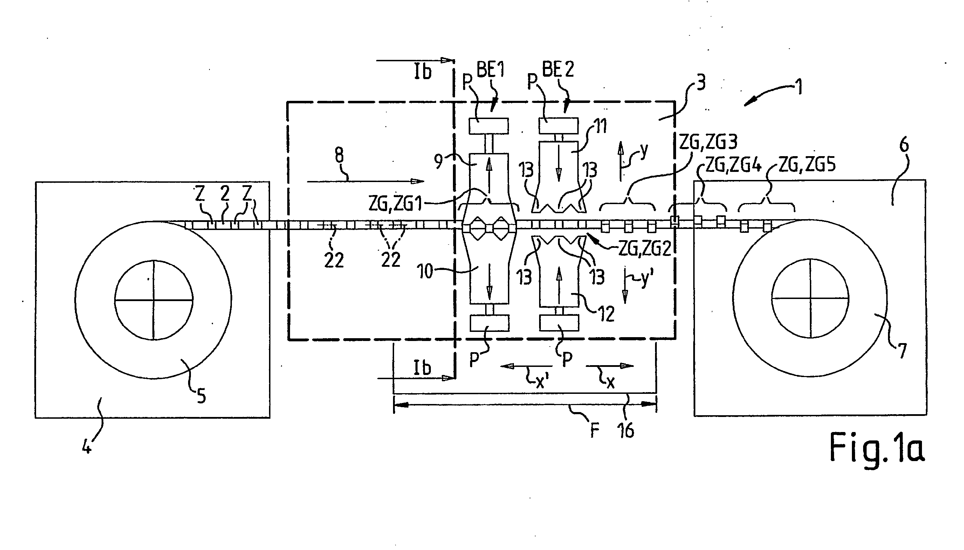

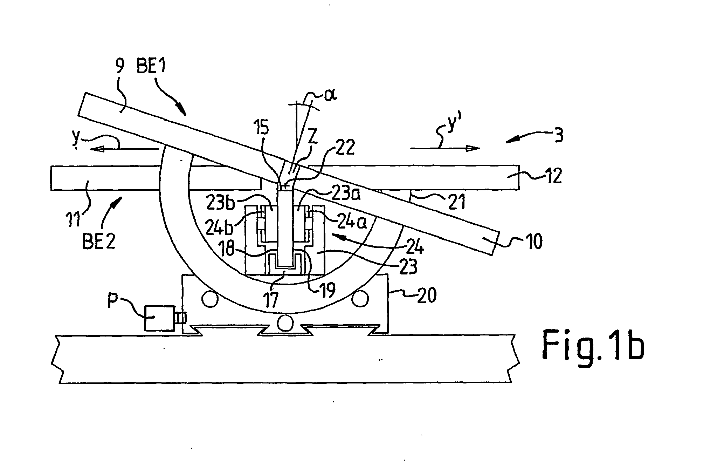

In der Figur 1a ist eine erste Ausführungsvariante einer Maschine 1 zur Bearbeitung eines Sägebandes 2 dargestellt. Die Maschine 1 umfasst eine Vorrichtung 3 zum Schränken bzw. Biegen von Zähnen Z. Bei der dargestellten Maschine 1 wird das Sägeband 2 von einer Abwickelvorrichtung 4 von einer ersten Spule 5 abgewickelt, durch die Vorrichtung 3 geführt und von einer Aufwickelvorrichtung 6 auf eine zweite Spule 7 aufgewickelt. Die Vorrichtung 3 zum Schränken bzw. Biegen der Zähne Z des Sägebandes 2 ist schematisch und in Draufsicht dargestellt. Die Vorrichtung 3 umfasst eine erste Biegeeinheit BE1 und eine zweite Beigeeinheit BE2. Die Biegeeinheiten BE1 und BE2 sind in Pfeilrichtungen x bzw. x' entlang einer Vorlaufrichtung 8 des Sägebandes 2 unabhängig von dem Sägeband 2 durch Antriebe P (siehe Figur 1b) verfahrbar. Jede Biegeeinheit BE1 bzw. BE2 umfasst jeweils zwei Backen 9, 10 bzw. 11, 12, welche quer zu der Vorlaufrichtung 8 in y- bzw. y'-Richtung durch weitere Antriebe P verfahrbar sind. Jede der Backen 9-12 weist je drei Finger 13 auf, wobei die Finger 13 gegenüberliegender Backen 9, 10 bzw. 11, 12 aufeinander ausgerichtet sind. Jede Biegeeinheit BE1 bzw. BE2 kann durch eine entsprechende Verschiebung in die x- bzw. x'-Richtung auf eine aus drei Zähnen Z bestehende Zahngruppe ZG ausgerichtet werden. Durch ein Zusammenfahren der Backen 9, 10 bzw. 11, 12 können die Zähen Z der Zahngruppe ZG zwischen den Fingern 13 geklemmt und anschließend relativ zu einer Hochachse H des Sägebandes 2 in y-Richtung oder in y'-Richtung um einen gewünschten Winkel α um eine Biegeachse 22 gebogen werden (siehe auch Figur 1b). Entsprechend den Anforderungen an das Sägeband 2 werden die einzelnen Zahngruppen ZG1 bis ZG5 zum Beispiel abwechselnd in y-Richtung und in y'-Richtung gebogen. Der Biegevorgang erfolgt vorzugsweise während sich das Sägeband 2 in die Vorlaufrichtung 8 bewegt, wobei die jeweils biegende Biegeeinheit BE1 bzw. BE2 hierbei mit dem Sägeband 2 in die Vorlaufrichtung 8 mitfahrt. Nachdem die drei Zähen Z der jeweiligen Zahngruppe ZG auf einen gewünschten Winkel α gebogen sind, fahren die Backen 9, 10 bzw. 11, 12 der biegenden Biegeeinheit BE1 bzw. BE2 in y- bzw. y'-Richtung zurück und geben das Sägeband 2 frei. Während anschließend die jeweils andere Biegeeinheit BE2 bzw. BE1 die folgende Zahngruppe ZG biegt und hierbei ebenfalls mit dem Sägeband 2 mitfährt, bewegt sich die Biegeeinheit BE1 bzw. BE2 in x'-Richtung entgegen der Vorlaufrichtung 8 zurück. Dieser grundsätzliche Ablauf wird anhand nachfolgender Figuren noch im Detail erläutert.

In der Figur 1b ist eine Schnittansicht entsprechend der in der Figur 1a gezeigten Schnittlinie Ib-Ib dargestellt, wobei zur Erhaltung der Übersichtlichkeit auf eine Schraffur geschnittener Bauteile verzichtet wurde und auch die Backen 9 bis 12 vereinfacht dargestellt sind. Das Sägeband 2 besteht aus einem im Schnitt der Figur 1b rechteckförmigen Streifen 14, auf dessen Oberseite 15 in regelmäßigen Abständen die Zähne Z angeordnet sind. Ein Arbeitsbereich 16 (siehe Figur 1a), in welchem sich die Biegeeinheiten BE1, BE2 bewegen können, definiert eine Fahrstrecke F. In diesem Arbeitsbereich 16 wird das Sägeband 2 in einer U-förmigen Führung 17 an Längsseiten 18, 19 geführt. Die Biegeeinheiten BE1 bzw. BE2 umfassen neben den Backen 9, 10 bzw. 11, 12 je eine Schwenkvorrichtung 20, 21, wobei in der Figur 1b im wesentlichen nur die Schwenkvorrichtung 20 der ersten Biegeeinheit BE1 sichtbar ist. Die Schwenkvorrichtung 20 ermöglicht es, die Backen 9, 10 gemeinsam um die in die Vorschubrichtung 8 verlaufenden Biegeachsen 22 der Zähne Z zu schwenken. Hierbei wird die jeweilige Zahngruppe ZG gegenüber dem Streifen 14 des Sägebandes 2 in die y-Richtung oder die y'-Richtung gebogen. Bei der in den Figuren 1a und 1b dargestellten Vorrichtung 1 wird das Sägeband 2 von den Biegeeinheiten BE1 und BE2 transportiert. Hierzu umfassen die Biegeeinheiten BE1 und BE2 jeweils eine Klemmvorrichtung 23, 24 mit verfahrbaren Klemmbacken 23a, 23b bzw. 24a, 24b. In der Figur 1b sind von der Klemmvorrichtung 24 der Biegeeinheit BE2 nur die Klemmbacken 24a, 24b teilweise sichtbar. Die übrigen Bauteile sind durch die Klemmvorrichtung 23 verdeckt. Der Transport wird von den beiden Beigeeinheiten BE1, BE2 abwechselnd durchgeführt und erfolgt während des Biegens einer der Zahngruppe ZG. In der Figur 1a ist eine Situation dargestellt, in welcher die Biegeeinheit BE 1 ihren Biegevorgang bereits durchgeführt hat und dabei ist das Sägeband 2 durch eine Rückfahrbewegung der Backen 9, 10 und der Klemmbacken 24a, 24b freizugeben und in welcher die Biegeeinheit BE2 gerade dabei ist das Sägeband 2 bzw. die Zähne Z der Zahngruppe ZG2 zu greifen bzw. zwischen ihren Backen 11 und 12 bzw. Fingern 13 zu klemmen und unterhalb der Zahngruppe ZG2 mit den Klemmbacken 23a, 23b zu greifen, um den Transport des Sägebandes 2 zu übernehmen und während des Transports die Zähne Z der Zahngruppe 2 in die y-Richtung zu biegen.

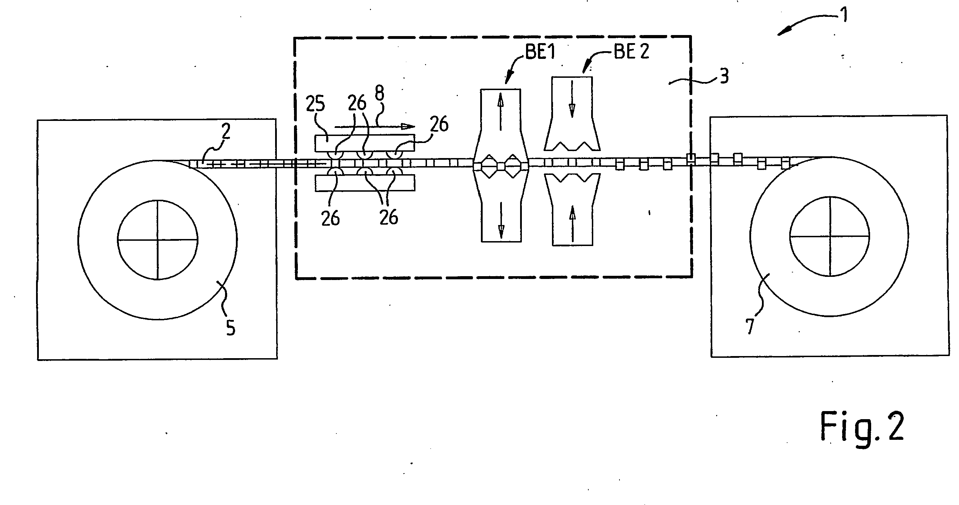

In der Figur 2 ist eine zweite Ausführungsvariante einer Maschine 1 zur Bearbeitung eines Sägebandes 2 dargestellt. Analog zu der in den Figuren 1a und 1b dargestellten ersten Ausführungsvariante weist diese Maschine 1 ebenfalls eine Vorrichtung 3 mit einer ersten Biegeeinheit BE1 und einer zweiten Biegeeinheit BE2 auf, die vereinfacht dargestellt sind. Bezüglich der Funktionsweise der Biegeeinheiten BE1 und BE2 wird auf die Beschreibung zu den Figuren 1a und 1b verwiesen. Im Unterschied zu den dort beschriebenen Biegeeinheiten umfassen diese jedoch keine Klemmvorrichtungen. Der Transport des Sägebandes 2 von einer ersten Spule 5 auf eine zweite Spule 7 erfolgt mittels einer zu der Vorrichtung 3 gehörenden Transporteinheit 25, welche das Sägeband 2 mit Transportrollen 26 in eine Vorlaufrichtung 8 antreibt.

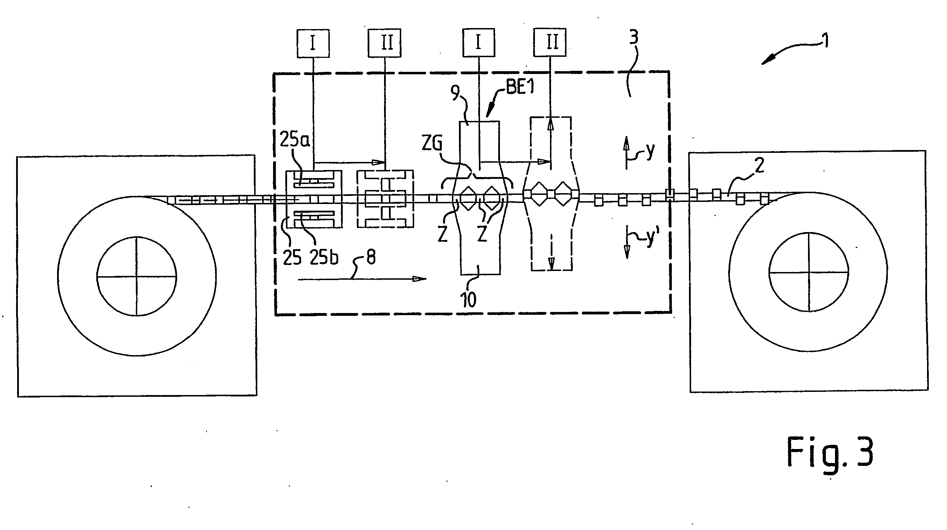

In der Figur 3 ist eine dritte Ausführungsvariante einer Maschine 1 zur Bearbeitung eines Sägebandes 2 dargestellt. Im Unterschied zu den in den Figuren 1a, 1b und 2 dargestellten Ausführungsvarianten weist diese Maschine 1 eine Vorrichtung 3 mit nur einer Biegeeinheit BE1 auf. Bezüglich der Funktionsweise der Biegeeinheiten BE1 wird insbesondere auf die Beschreibung zu den Figuren 1a und 1b verwiesen. Die Biegeeinheit BE1 biegt eine Gruppe ZG von Zähnen Z während sich das Sägeband 2 in eine Vorlaufrichtung 8 bewegt. Da die Biegeinheit BE1 keine Klemmvorrichtung aufweist, wird der Vorlauf durch eine zu der Vorrichtung 3 gehörende Transporteinheit 25 erzeugt. Die Transporteinheit 25 weist Klemmbacken 25a, 25b auf, mit welchen das Sägeband 2 in einer Stellung I geklemmt und in eine Stellung II transportiert wird. Zeitgleich zu einem solchen Transportvorgang klemmen Backen 9, 10 der Biegeinheit BE1 die Zähne Z der Zahngruppe ZG in einer Stellung I und biegen diese während der Transportbewegung in eine Pfeilrichtung y. Anschließend geben die Transporteinheit 25 und die Biegeeinheit BE1 das Sägeband 2 frei und fahren entgegen der Vorlaufrichtung 8 in ihre jeweilige Stellung I zurück.

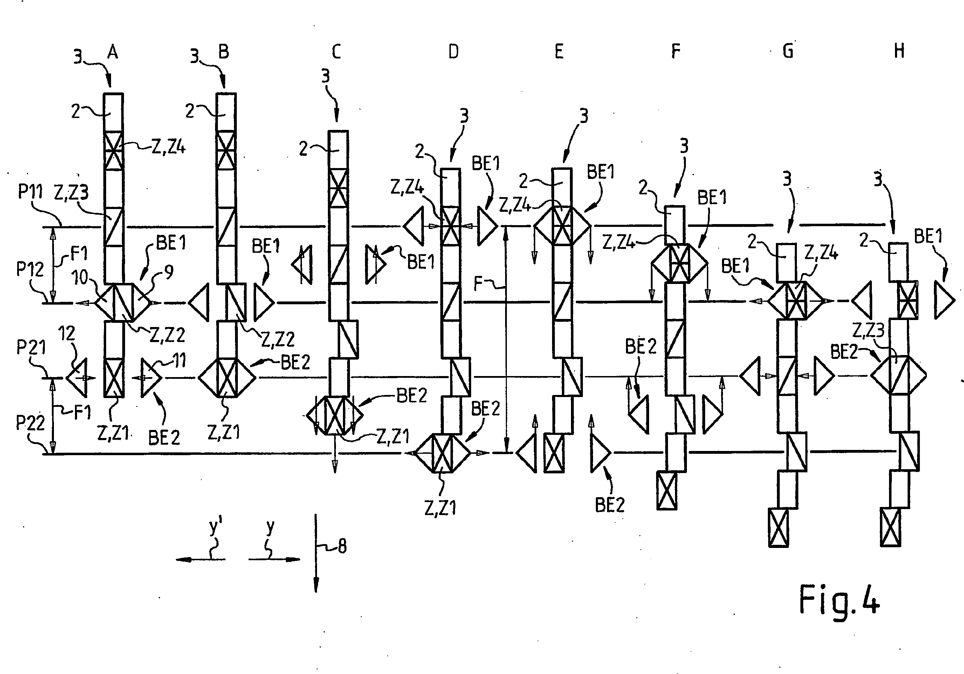

In der Figur 4 ist in acht schematischen Darstellungen A bis H ein Bewegungsablauf beim Schränken von Zähnen Z eines Sägebandes 2 in einer erfindungsgemäßen Vorrichtung 3 mit einer ersten Biegeeinheit BE 1 und einer zweiten Biegeeinheit BE2 dargestellt. Die Biegeeinheiten BE1 und BE2 sind jeweils durch Backen 9, 10 bzw 11, 12 symbolisiert. Der in der Figur 4 dargestellte Bewegungsablauf betrifft sowohl Vorrichtungen entsprechend den Figuren 1a und 1b, bei welchen der Transport des Sägebandes durch die Biegeeinheiten erfolgt, als auch Vorrichtungen entsprechend der Figur 2, bei welchen der Transport des Sägebandes durch eine unabhängig von den Biegeeinheiten arbeitende Transporteinheit erfolgt. Im Unterschied zu den in den Figuren 1a, 1b und 2 gezeigten Vorrichtungen werden hier von den Biegeinheiten BE1 und BE2 nur einzelne Zähne Z geschränkt, um die Darstellung übersichtlich zu halten. Die Darstellungen A bis H der Figur 4 zeigen jeweils eine Draufsicht auf einen Abschnitt des Sägebandes 2, welcher vier Zähne Z bzw. Z1 bis Z4 aufweist. Das Sägeband 2 wird während der einzelnen Schränkvorgänge in eine Vorlaufrichtung 8 bewegt. Die Darstellung A zeigt einen Zustand, in welchem der Zahn Z2 bereits durch die Biegeeinheit BE1 geschränkt wurde und die Biegeeinheit BE1 dabei ist den Zahn Z2 freizugeben. Gleichzeitig ist die Biegeeinheit BE2 dabei den Zahn Z1 mit ihren Backen 11, 12 zu klemmen. Das Freigeben des Zahns Z2 durch die Biegeeinheit BE1 und das Klemmen des Zahns Z1 durch die Biegeeinheit BE2 sind in der Darstellung B dann erfolgt, wobei das Sägeband 2 während dieser Bewegungen still steht. Die Darstellung C zeigt das Sägeband 2 in Bewegung in die Vorlaufrichtung 8, wobei sich die Biegeeinheit BE2 mit dem Sägeband 2 bzw. mit dem Zahn Z1 von einer Position P21 in eine Position P22. bewegt und während dieser Bewegung den Zahn Z1 in y'-Richtung biegt. Gleichzeitig ist die Biegeeinheit BE1 dabei aus einer Position P21, in welcher sie den Zahn Z2 freigegeben hat, entgegen der Vorlaufrichtung 8 des Sägebandes 2 in eine Position P11 zurück zu fahren. In der Darstellung D hat die Biegeeinheit BE2 mit dem Zahn Z1 dann die Position P22 erreicht und diesen vollständig gebogen. Ebenso ist die Biegeeinheit BE1 in ihre hintere Position P11 zurückgekehrt. Vergleichbar zu der Darstellung A erfolgt nun ein Freigeben des Zahns Z1 durch die Biegeeinheit BE2 und ein Klemmen des Zahns Z4 durch die Biegeeinheit BE1. Dieser Freigabe- bzw. Klemmvorgang ist in der Darstellung E abgeschlossen. Die Darstellung F zeigt nun wie die Biegeeinheit BE2 entgegen der Vorlaufrichtung 8 aus der vorderen Position P22 in die hintere Position P21 zurückfährt und wie die Biegeeinheit BE1 den Zahn Z4 in y-Richtung biegt und hierbei von der hinteren Position P11 in die vordere Position P12 fährt. Die angestrebten Positionen P21 bzw. P12 sind in der Darstellung G dann erreicht, das heißt, der Zahn Z4 ist durch die Biegeeinheit BE1 vollständig gebogen und die Biegeeinheit BE2 steht in der Position P21. In der Darstellung G entspricht die Stellung der Biegeeinheiten BE1 und BE2 der Stellung der Biegeeinheiten BE1 und BE2 in der Darstellung A. Somit wiederholt sich der in den Darstellungen A bis G gezeigte Vorgang ab der Darstellung H, wobei als nächster Zahn Z der Zahn Z3 von der Biegeeinheit BE2 geschränkt wird und die Biegeeinheit BE1 in ihre Position P11 zurück fährt. Die Positionen P11 und P22 definieren Anfang und Ende einer Fahrstrecke F, auf welcher sich die Biegeeinheiten BE1 und BE2 bewegen können. Hierbei verfährt die Biegeeinheit BE1 auf einer Teilstrecke F1 und die Biegeeinheit BE2 verfährt auf einer Teilstrecke F2. Gemäß einer nicht dargestellten Ausführungsvariante ist es auch vorgesehen, dass die Biegeeinheiten das Sägeband während einer kontinuierlichen oder verlangsamten Vorlaufbewegung klemmen bzw. freigeben. Dies kann sowohl bei einem Antrieb des Sägebandes durch die Biegeeinheiten als auch bei der Verwendung einer von den Biegeeinheiten unabhängigen Transporteinrichtung erfolgen. Sofern das Sägeband durch die Biegeeinheiten transportiert wird gilt dann, dass zu jeder Zeit wenigstens eine Biegeeinheit das Sägeband transportiert.

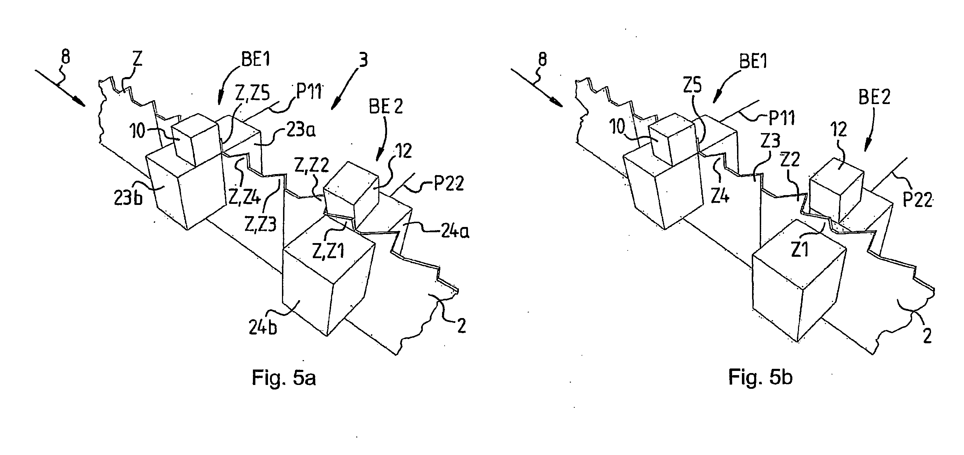

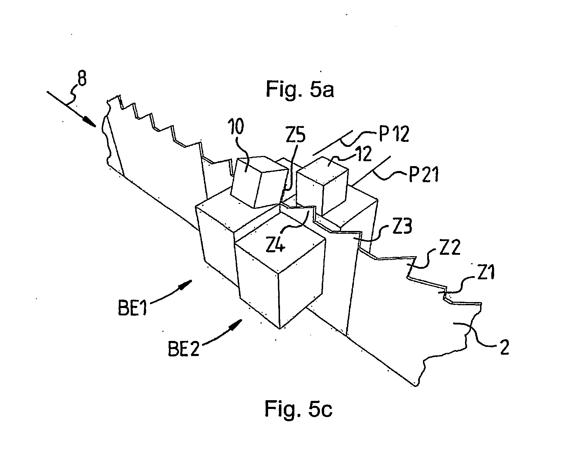

In den Figuren 5a bis 5c ist ein weiterer Bewegungsablauf beim Schränken von Zähnen Z bzw. Z1 bis Z5 eines Sägebandes 2 mit einer erfindungsgemäßen Vorrichtung 3 dargestellt. Die Vorrichtung weist Biegeeinheiten BE1 und BE2 auf. Diese sind jeweils durch eine Backe 10 bzw. 12 und Klemmbacken 23a, 23b bzw. 24a, 24b von zu den Biegeeinheiten BE1 und BE2 gehörenden Klemmvorrichtungen 23, 24 symbolisiert. Das Sägeband 2 wird in eine Vorlaufrichtung 8 bewegt. In der Figur 5a steht die Biegeeinheit BE2 in einer vorderen Position P22 und die Biegeeinheit BE1 steht in einer hinteren Position P11. Die Biegeeinheit BE1 hat bereits das Sägeband 2 geklemmt und liegt mit ihrer Backe 10 an dem Zahn Z5 an. Die Biegeeinheit BE2 hat gerade den Zahn Z1 vollständig gebogen und wird das Sägeband 2 anschließend frei geben. In der Figur 5b beginnt die Biegeeinheit BE2 gerade mit einer Rückfahrbewegung entgegen der Vorlaufrichtung 8 aus der vorderen Position P22 in eine hintere Position P21 (siehe Figur 5c) und die Biegeeinheit BE1 bewegt sich mit dem Sägeband 2 bzw. mit dem Zahn Z1 aus der hinteren Position P11 in eine vordere Position P12 (siehe Figur 5c) in die Vorlaufrichtung 8. In der Figur 5c sind dann die Positionen P12 und P21 erreicht, wobei die Biegeeinheit BE1 den Zahn Z5 vollständig gebogen hat und die Biegeeinheit BE2 dabei ist, das Sägeband 2 zu klemmen und hierbei mit der Backe 12 an den Zahn Z4 heranzufahren. Entsprechend einer speziellen Vorgabe ist die Vorrichtung 3 so programmiert, dass jeder Dritte Zahn Z3 des Sägebandes 2 nicht geschränkt wird.

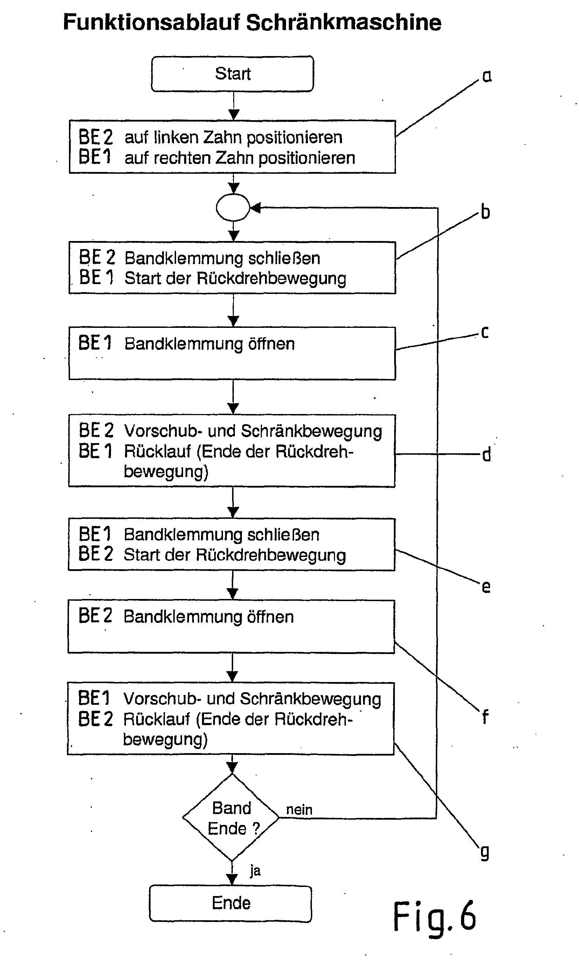

Die Figur 6 zeigt in Form eines Flussdiagramms einen möglichen Ablauf beim Schränken von Zähnen eines Sägebandes mit einer erfindungsgemäßen Vorrichtung. Entsprechend der Anweisung a werden zwei Biegeeinheiten BE1, BE2 zunächst beispielsweise auf einen nach rechts und einen nach links zu biegenden Zahn positioniert. Der Einstieg in die durch die Anweisungen b bis g gebildete Schleife beginnt, wenn die erste Biegeeinheit BE1 einen Zahn gebogen hat und die in Vorlaufrichtung des Bandes vor dieser liegende zweite Biegeeinheit BE2 auf den in Vorlaufrichtung vor dem gebogenen Zahn liegenden Zahn ausgerichtet ist. Entsprechend der Anweisung b schließt sich nun die Bandklemmung der zweiten Biegeeinheit BE2. Mit Blick auf das in den Figuren 1a und 1b gezeigte Ausführungsbeispiel bedeutet dies, dass der Zahn des Sägebandes zwischen den Backen der Biegeeinrichtung.und der unter dem Zahn liegende Teil des Sägebandes zwischen den Klemmbacken der zur Biegeinrichtung gehörenden Klemmvorrichtung geklemmt wird. Gleichzeitig erfolgt eine Rückdrehbewegung der Backen der ersten Biegeeinheit BE1. Entsprechend der Anweisung c folgt auf die Rückdrehbewegung der ersten Biegeeinheit BE1 eine Öffnung der Bandklemmung. Dies bedeutet im Hinblick auf die Figuren 1a und 1b ein öffnen der Backen und der Klemmbacken. Entsprechend der Anweisung d folgt nun eine Vorschub- und Schränkbewegung des Sägebandes bzw. des geklemmten Zahns durch die zweite Beigeeinheit BE2 und gleichzeitig eine Rücklauf bzw. Eine Rückfahrbewegung der ersten Biegeeinrichtung BE1. in Analogie zu den Anweisungen b bis d beschreiben die Anweisungen e bis g die bekannten Schritte nun für die jeweils andere Biegeeinrichtung. Die Anweisungen b bis g werden wiederholt bis die Zähne des Sägebandes vollständig geschränkt sind.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Maschine
- 2: Sägeband
- 3: Vorrichtung
- 4: Abwickelvorrichtung
- 5: erste Spule
- 6: Aufwickelvorrichtung
- 7: zweite Spule
- 8: Vorlaufrichtung
- 9, 10: Backe von BE1
- 11, 12: Backe von BE2
- 13: Finger von 9 -12
- 14: Streifen
- 15: Oberseite von 14
- 16: Arbeitsbereich von BE1 und BE2
- 17: Führung für 2
- 18, 19: Längsseite von 2
- 20, 21: Schwenkvorrichtung
- 22: Biegeachse von Z
- 23, 24: Klemmvorrichtung von BE1 bzw. BE2
- 25: Transporteinheit
- 26: Transportrollen
- A - H: Darstellung
- a - g: Anweisung
- BE1, BE2: erste, zweite Biegeeinheit
- F, F1, F2: Fahrstrecke, Teilstrecke für BE1 bzw. BE2
- P: Antrieb
- P11, P21: hintere Position von BE1 bzw. BE2
- P12, P22: vordere Position von BE1 bzw. BE2
- x, x': Richtung
- y, y': Richtung
- Z; Z1 - Z5: Zahn; erster bis fünfter Zahn
- ZG; ZG1 - ZG5: Zahngruppe; erste bis fünfte Zahngruppe
- I, II: Position

## Patentansprüche

1. Vorrichtung (3) zum Schränken von Zähnen (Z; Z1 - Z5) eines Sägebandes (2) mit wenigstens einer um Biegeachsen (22) der Zähne (Z; Z1 - 25) des Sägebandes (2) verschwenkbaren Biegeeinheit (BE1, BE2), **dadurch gekennzeichnet, dass** die Biegeeinheit (BE1, BE2) auf einer parallel zu einer Vorlaufrichtung (8, x) des Sägebandes (2) liegenden Fahrstrecke (F) unabhängig von dem Sägeband (2) verfahrbar ist.

2. Vorrichtung nach Anspruch 1, **dadurch gekennzeichnet, dass** die Vorrichtung (3) wenigstens eine zweite Biegeeinheit (BE2) aufweist, welche um die Biegeachsen (22) der Zähne (Z; Z1 - Z5) des Sägebandes (2) verschwenkbar ist, wobei diese zweite Biegeeinheit (BE2) ebenfalls auf einer parallel zu der Laufrichtung (8, x) des Sägebandes (2) liegenden Fahrstrecke (F) unabhängig von dem Sägeband (2) und unabhängig von der ersten Biegeeinheit (BE1) verfahrbar ist.

3. Vorrichtung nach einem der vorhergehenden Ansprüche, **dadurch gekennzeichnet, dass** die Biegeeinheit (BE1, BE2) und das Sägeband (2) gleichzeitig verfahrbar ist.

4. Vorrichtung nach einem der vorhergehenden Ansprüche, **dadurch gekennzeichnet, dass** während einer Mitfahrbewegung der ersten und/oder der zweiten Biegeeinheit (BE1, BE2) mit dem Sägeband (2) wenigstens einer der Zähne (Z; Z1 - Z5) des Sägebandes (2) durch die jeweils mitfahrende Biegeeinheit (BE1, BE2) biegbar ist.

5. Vorrichtung nach einem der vorhergehenden Ansprüche, **dadurch gekennzeichnet, dass** das Sägeband (2) durch die erste Biegeeinheit (BE1) und/oder die zweite Biegeeinheit (BE2) transportierbar ist.

6. Vorrichtung nach einem der vorhergehenden Ansprüche, **dadurch gekennzeichnet, dass** das Sägeband (2) abwechselnd durch die erste bzw. zweite Biegeeinheit (BE1, BE2) transportierbar ist.

7. Vorrichtung nach einem der Ansprüche 1 bis 4, **dadurch gekennzeichnet, dass** das Sägeband (2) durch eine Transporteinheit (25) transportierbar ist.

8. Verfahren zum Transport eines Sägebandes (2) mittels einer ersten Biegeeinheit (BE1) und einer zweiten Biegeeinheit (BE2) in einer Vorrichtung zum Schränken von Zähnen, **dadurch gekennzeichnet, dass** das Sägeband (2) von den Biegeeinheiten (BE1, BE2) abwechselnd in eine Vorlaufrichtung (8, x) transportiert wird, wobei die Biegeeinheiten (BE1, BE2) in einer parallel zu der Vorlaufrichtung des Sägebandes (2) liegenden Fahrstrecke unabhängig von dem Sägeband verfahren werden.

9. Verfahren zum Transport eines Sägebandes (2) nach Anspruch 8, **dadurch gekennzeichnet, dass** während des Transports des Sägebandes (2) durch eine der Biegeeinheiten (BE1, BE2) wenigstens ein Zahn (Z; Z1 - Z5) des Sägebandes (2) gebogen wird.

10. Verfahren zum Schränken von Zähnen (Z; Z1 - Z5) eines Sägebandes (2) mit den folgenden Schritten, wobei eine erste Biegeeinheit (BE1) in einer hinteren Position (P11) auf einen ersten Zahn (Z1) oder eine erste Zahngruppe (ZG1) ausgerichtet ist und wobei eine zweite Biegeeinheit (BE2) in einer vorderen Position (P22) auf einen zweiten Zahn (Z2) oder eine zweite Zahngruppe (ZG2) ausgerichtet ist
- Transport des Sägebandes (2) in eine Vorlaufrichtung (8, x) und gleichzeitiges Biegen des ersten Zahns (Z1) oder der ersten Zahngruppe (ZG1) durch die erste Biegeeinheit (BE1) und gleichzeitiger Rücklauf der zweiten Biegeeinheit (BE2) in eine Rücklaufrichtung (x') auf eine hintere Position (P21) der zweiten Biegeeinheit (BE2);
- Transport des Sägebandes (2) in die Vorlaufrichtung (8, x) und gleichzeitiges Biegen des vierten Zahns (Z4) oder der vierten Zahngruppe (ZG4) durch die zweite Biegeeinheit (BE2) und Rücklauf der ersten Biegeeinheit (BE1) in die Rücklaufrichtung (x') auf die hintere Position (P11) der ersten Biegeeinheit (BE1).

11. Verfahren nach Anspruch 10, **dadurch gekennzeichnet, dass** vor dem ersten Transport folgende Schritte erfolgen,
- Klemmen des ersten Zahns (Z1) oder der ersten Zahngruppe (ZG1) durch die erste Biegeeinheit (BE1) in der hinteren Position (P11) der ersten Biegeeinheit (BE1) und gleichzeitiges oder späteres Freigeben des zweiten Zahns (Z2) oder der zweiten Zahngruppe (ZG2) durch die zweite Biegeeinheit (BE2) in der vorderen Position (P22) der zweiten Biegeeinheit (BE2),
und das vor dem zweiten Transport folgende Schritte erfolgen,
- Freigeben des ersten Zahns (Z1) oder der ersten Zahngruppe (ZG1) durch die erste Biegeeinheit (BE1) in einer vorderen Position (P12) der ersten Biegeeinheit (BE1) und vorhergehendes oder gleichzeitiges Klemmen eines vierten Zahns (Z4) oder einer vierten Zahngruppe (ZG4) durch die zweite Biegeeinheit (BE2) in der hinteren Position (P21) der zweiten Biegeeinheit (BE2).

12. Verfahren nach Anspruch 10 oder 11, **dadurch gekennzeichnet, dass** der erste Transport des Sägebandes (2) durch die erste Biegeeinheit (BE1) und der zweite Transport des Sägebandes (2) durch die zweite Biegeeinheit (BE2) erfolgt.

13. Verfahren nach Anspruch 10 oder 11, **dadurch gekennzeichnet, dass** der erste und der zweite Transport des Sägebandes (2) durch eine Transporteinheit (25) erfolgt.

14. Verfahren nach Anspruch 10 oder 11, **dadurch gekennzeichnet, dass** die Biegeeinheit (BE1; BE2) das Sägeband (2) klemmt während es noch von der anderen Biegeeinheit (BE2; BE1) transportiert wird oder während die andere Biegeeinheit (BE2; BE1) noch mit dem Sägeband (2) mitfährt.

## Claims

1. Device (3) for setting of teeth (Z; Z1 - Z5) of a saw band (2) with at least one bending unit (BE1, BE2), which can be pivoted about bending axes (22) of the teeth (Z; Z1 - Z5) of the saw band (2), **characterised in that** the bending unit (BE1, BE2) can be moved on a section (F) located parallel to an advance direction (8, x) of the saw band (2), independently of the saw band (2).

2. Device according to claim 1, **characterised in that** the device (3) has at least a second bending unit (BE2), which can be pivoted about the bending axes (22) of the teeth (Z; Z1 - Z5) of the saw band (2), this second bending unit (BE2) also being moveable on a section (F) located parallel to the advance direction (8, x) of the saw band (2), independently of the saw band (2) and independently of the first bending unit (BE1).

3. Device according to either of the preceding claims, **characterised in that** the bending unit (BE1, BE2) and the saw band (2) can be moved simultaneously.

4. Device according to any one of the preceding claims, **characterised in that** during an accompanying movement of the first and/or the second bending unit (BE1, BE2) with the saw band (2), at least one of the teeth (Z; Z1 - Z5) of the saw band (2) can be bent by the respective bending unit (BE1, BE2) also moving.

5. Device according to any one of the preceding claims, **characterised in that** the saw band (2) can be transported by the first bending unit (BE1) and/or the second bending unit (BE2).

6. Device according to any one of the preceding claims, **characterised in that** the saw band (2) can be transported alternately by the first and second bending unit (BE1, BE2).

7. Device according to any one of claims 1 to 4, **characterised in that** the saw band (2) can be transported by a transporting unit (25).

8. Method for transporting a saw band (2) by means of a first bending unit (BE1) and a second bending unit (BE2) in a device for setting teeth, **characterised in that** the saw band (2) is alternately transported by the bending units (BE1, BE2) in an advance direction (8, x), in which the bending units (BE1, BE2) being moved in a section located parallel to the advance direction of the saw band (2), independently of the saw band.

9. Method for transporting a saw band (2) according to claim 8, **characterised in that** during the transportation of the saw band (2), at least one tooth (Z; Z1 - Z5) of the saw band (2) is bent by one of the bending units (BE1, BE2).

10. Method for setting the teeth (Z; Z1 - Z5) of a saw band (2) comprising the following steps, wherein a first bending unit (BE1) in a rear position (P11) is oriented to a first tooth (Z1) or a first tooth group (ZG1) and wherein a second bending unit (BE2) in a front position (P22) is oriented to a second tooth (Z2) or a second tooth group (ZG2)
- transporting the saw band (2) in an advance direction (8, x) and simultaneous bending of the first tooth (Z1) or the first tooth group (ZG1) by means of the first bending unit (BE1) and simultaneous return of the second bending unit (BE2) in a return direction (x') to a rear position (P21) of the second bending unit (BE2);
- transporting the saw band (2) in the advance direction (8, x) and simultaneous bending of the fourth tooth (Z4) or the fourth tooth group (ZG4) by means of the second bending unit (BE2) and return of the first bending unit (BE1) in the return direction (x') to the rear position (P11) of the first bending unit (BE1).

11. Method according to claim 10, **characterised in that** the following steps take place before the first transportation,
- clamping the first tooth (Z1) or the first tooth group (ZG1) by means of the first bending unit (BE1) in the rear position (P11) of the first bending unit (BE1) and simultaneous or later release of the second tooth (Z2) or the second tooth group (ZG2) by the second bending unit (BE2) in the front position (P22) of the second bending unit (BE2), and **in that** before the second transportation, the following steps take place,
- release of the first tooth (Z1) or the first tooth group (ZG1) by the first bending unit (BE1) in a front position (P12) of the first bending unit (BE1) and prior or simultaneous clamping of a fourth tooth (Z4) or a fourth tooth group (ZG4) by the second bending unit (BE2) in the rear position (P21) of the second bending unit (BE2).

12. Method according to claim 10 or 11, **characterised in that** the first transportation of the saw band (2) takes place by means of the first bending unit (BE1) and the second transportation of the saw band (2) takes place by means of the second bending unit (BE2).

13. Method according to claim 10 or 11, **characterised in that** the first and the second transportation of the saw band (2) take place by means of a transporting unit (25).

14. Method according to claim 10 or 11, **characterised in that** the bending unit (BE1; BE2) clamps the saw band (2) while it is still being transported by the other bending unit (BE2, BE1) or while the other bending unit (BE2, BE1) is still moving with the saw band (2).

## Revendications

1. Dispositif (3) pour avoyer les dents (Z ; Z1 - Z5) d'un ruban de scie (2) avec au moins une unité de pliage (BE1, BE2) qui peut pivoter autour d'un axe de pliage (22) des dents (Z ; Z1 - Z5) du ruban de scie (2),
**caractérisé en ce que**
l'unité de pliage (BE1, BE2) est mobile sur un trajet (F) parallèle à la direction d'avancée (8, x) du ruban de scie (2), indépendamment de ce ruban de scie (2).

2. Dispositif selon la revendication 1,
**caractérisé en ce qu'**
il comporte au moins une seconde unité de pliage (BE2) qui peut pivoter autour de l'axe de pliage (22) des dents (Z ; Z1 - Z5) du ruban de scie (2),
cette seconde unité de pliage (BE2) étant également mobile sur un trajet (F) parallèle à la direction d'avancée (8, x) du ruban de scie (2), indépendamment du ruban de scie (2) et indépendamment de la première unité de pliage (BE1).

3. Dispositif selon l'une des revendications précédentes,
**caractérisé en ce que**
l'unité de pliage (BE1, BE2) et le ruban de scie (2) sont mobiles simultanément.

4. Dispositif selon l'une des revendications précédentes,
**caractérisé en ce qu'**
au cours d'un mouvement commun de la première et/ou de la seconde unité de pliage (BE1, BE2) et du ruban de scie (2), au moins l'une des dents (Z ; Z1 - Z5) du ruban de scie (2) est pliée par l'unité de pliage respective (BE1, BE2) qui se déplace en même temps.

5. Dispositif selon l'une des revendications précédentes,
**caractérisé en ce que**
le ruban de scie (2) est transporté par la première unité de pliage (BE1) et/ou la seconde unité de pliage (BE2).

6. Dispositif selon l'une des revendications précédentes,
**caractérisé en ce que**
le ruban de scie (2) est transporté alternativement par la première ou la seconde unité de pliage (BE1, BE2).

7. Dispositif selon l'une des revendications 1 à 4,
**caractérisé en ce que**
le ruban de scie (2) est transporté par une unité de transport (25).

8. Procédé de transport d'un ruban de scie (2) à l'aide d'une première unité de pliage (BE1) et d'une seconde unité de pliage (BE2) dans un dispositif pour avoyer des dents,
procédé **caractérisé en ce que**
le ruban de scie (2) est transporté alternativement dans la direction d'avancée (8, x) par les unités de pliage (BE1, BE2),
* les unités de pliage (BE1, BE2) étant déplacées sur un trajet parallèle à la direction d'avancée du ruban de scie (2), indépendamment de ce ruban de scie (2).

9. Procédé de transport d'un ruban de scie (2) selon la revendication 8,
**caractérisé en ce que**
pendant le transport du ruban de scie (2) par l'une des unités de pliage (BE1, BE2), on courbe au moins une dent (Z ; Z1 - Z5) de ce ruban de scie (2).

10. Procédé d'avoyage des dents (Z ; Z1 - Z5) d'un ruban de scie (2) comprenant les étapes ci-dessous, selon lequel
* une première unité de pliage (BE1) est alignée dans une position arrière (P11) sur une première dent (Z1) ou un premier groupe de dents (ZG1), et
* une seconde unité de pliage (BE2) est alignée dans une position avant (P22) sur une seconde dent (Z2) ou un second groupe de dents (ZG2),
- transport du ruban de scie (2) dans une direction d'avancée (8, x), pliage simultané de la première dent (Z1) ou du premier groupe de dents (ZG1) par la première unité de pliage (BE1) et retour simultané de la seconde unité de pliage (BE2) dans la direction de retour (x') sur une position arrière (P21) de la seconde unité de pliage (BE2),
- transport du ruban de scie (2) dans la direction d'avancée (8, x), pliage simultané de la quatrième dent (Z4) ou du quatrième groupe de dents (ZG4) par la seconde unité de pliage (BE2) et retour de la première unité de pliage (BE1) dans la direction de retour (x') sur la position arrière (P11) de la première unité de pliage (BE1).

11. Procédé selon la revendication 10,
caractérisé avant le premier transport, on exécute les étapes suivantes :
- serrage de la première dent (Z1) ou du premier groupe de dents (ZG1) par la première unité de pliage (BE1) dans la position arrière (P11) de la première unité de pliage (BE1) et libération simultanée ou ultérieure de la seconde dent (Z2) ou du second groupe de dents (ZG2) par la seconde unité de pliage (BE2) dans la position avant (P22) de la seconde unité de pliage (BE2),
et avant le second transport, on exécute les étapes suivantes :
- libération de la première dent (Z1) ou du premier groupe de dents (ZG1) par la première unité de pliage (BE1) dans une position avant (P12) de la première unité de pliage (BE1) et serrage préalable ou simultané d'une quatrième dent (Z4) ou d'un quatrième groupe de dents (ZG4) par la seconde unité de pliage (BE2) dans la position arrière (P21) de la seconde unité de pliage (BE2).

12. Procédé selon la revendication 10 ou 11,
**caractérisé en ce que**
le premier transport du ruban de scie (2) est fait par la première unité de pliage (BE1) et le second transport du ruban de scie (2) est fait par la seconde unité de pliage (BE2).

13. Procédé selon la revendication 10 ou 11,
**caractérisé en ce que**
le premier et le second transport du ruban de scie (2) sont faits par une unité de transport (25).

14. Procédé selon la revendication 10 ou 11,
**caractérisé en ce que**
l'unité de pliage (BE1, BE2) pince le ruban de scie (2) pendant qu'il est encore transporté par l'autre unité de pliage (BE2, BE1) ou pendant que l'autre unité de pliage (BE2, BE1) se déplace encore avec le ruban de scie (2).
